(19) Europäisches Patentamt
European Patent Office
Office européen des brevets

(11) **EP 2 281 259 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(21) Anmeldenummer: **09749482.7**

(22) Anmeldetag: **29.04.2009**

(51) Int Cl.:
***G06F 21/34*** *(2013.01)*

(86) Internationale Anmeldenummer:
**PCT/DE2009/000611**

(87) Internationale Veröffentlichungsnummer:
**WO 2009/140940 (26.11.2009 Gazette 2009/48)**

(54) **ÄNDERBARE PIN FÜR HARDWARETOKEN**

VARIABLE PIN FOR HARDWARE TOKEN

NIP MODIFIABLE POUR JETON MATÉRIEL

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.05.2008 DE 102008024364**

(43) Veröffentlichungstag der Anmeldung:
**09.02.2011 Patentblatt 2011/06**

(73) Patentinhaber: **Deutsche Telekom AG**
**53113 Bonn (DE)**

(72) Erfinder: **KRAMARZ-VON KOHOUT, Gerhard**
**53113 Bonn (DE)**

(74) Vertreter: **Cohausz Hannig Borkowski Wißgott Patent- und Rechtsanwaltskanzlei**
**Schumannstrasse 97-99**
**40237 Düsseldorf (DE)**

(56) Entgegenhaltungen:
**EP-A- 1 918 846      WO-A-2005/050417**
**US-A1- 2007 282 756**

- **OMER BERKMAN ET AL: "The Unbearable Lightness of PIN Cracking" FINANCIAL CRYPTOGRAPHY AND DATA SECURITY; [LECTURE NOTES IN COMPUTER SCIENCE], SPRINGER BERLIN HEIDELBERG, BERLIN, HEIDELBERG, Bd. 4886, 12. Februar 2007 (2007-02-12), Seiten 224-238, XP019085830 ISBN: 978-3-540-77365-8**

**Beschreibung**

Die Erfindung betrifft ein Passwortmanagementsystem zur Änderung und Überprüfung eines Passwortes und Zuweisung dieses Passwortes zu einem Hardwaretoken, insbesondere Magnetstreifenkarte und/oder Chipkarte, wobei das Passwort der Authentifizierung des Hardwaretokens gegenüber einem technischen System dient, wobei das Passwort eine Persönliche Identifikationsnummer PIN ist, und wobei die PIN mittels eines Algorithmus aus auslesbaren Daten, die auf dem Hardwaretoken gespeichert sind, ermittelbar ist.

Es sind Hardwaretoken wie beispielsweise reine Magnetstreifenkarten sowie Kombikarten, die sowohl einen Chip als auch einen Magnetstreifen haben, bekannt.

Solche Magnetstreifen-, Chip- bzw. Kombikarten dienen als Kundenkarten. Beispielsweise ermöglichen Bankkarten ihren Nutzern das Geldabheben an Geldautomaten und das elektronische Bezahlen an hierfür ausgestatteten Kassen im Einzelhandel.

Der Kunde erhält in der Regel auch eine PIN, d.h. eine persönliche Identifikationsnummer, zum Schutz der Applikationen, die die Daten auf dem Hardwaretoken nutzen.

Authentifikationsverfahren kommen selten ohne ein Passwort aus. Eine Chipkarte, Kombikarte, Magnetstreifenkarte oder ein sonstiges Hardware-Token etwa werden üblicherweise durch Eingabe einer numerischen PIN freigegeben. Der Begriff "Passwort" wird im Rahmen dieser Erfindung gleichbedeutend zu dem Begriff "PIN (Personal Identification Number)" verwendet. Ein Passwort ist eine Information zur Authentifizierung, die nur der rechtmäßige Nutzer kennen soll. Eine PIN kann alphanumerisch sein, besteht aber bei den beschriebenen Kundenkarten häufig nur aus einer Ziffernfolge.

Die Daten einer Magnetstreifenkarte sind nicht geschützt, sie sind ohne Sicherung auf dem Magnetstreifen abgelegt. Jedermann mit einem entsprechenden Lese-/Schreibgerät kann die Daten auslesen oder auch überschreiben.

Die PIN ist demzufolge üblicherweise nicht Teil der Daten, die für jedermann auslesbar sind, also z.B. auf einem Magnetstreifen gespeichert sind. Stattdessen wird die PIN mittels eines kryptographischen Verfahrens aus den Daten, die auf dem Magnetstreifen gespeichert sind, abgeleitet. Die Berechnung der PIN erfolgt nicht auf der Magnetstreifenkarte selbst, da diese als eine reine Datenkarte keinerlei Kalkulationen vornehmen kann. Stattdessen erfolgt die Berechnung entweder offline (beispielsweise für Bankkarten bedeutet dies eine Berechnung innerhalb des Geldausgabeautomaten) oder online (beispielsweise für Bankkarten bedeutet dies eine Berechnung in einem zentralen Server, der mit den einzelnen Geldausgabeautomaten vernetzt ist), indem beispielsweise ein Hashwert aus auf dem Magnetstreifen gespeicherten Daten (bei einer Bankkarte könnten dies die Kontonummer, die Bankleitzahl und eine Seriennummer sein) gebildet wird. Damit der Kunde eine PIN, die aus dezimalen Ziffern besteht, erhält, muss der Hashwert, wenn er ursprünglich einen hexadezimalen Wert darstellt, insgesamt oder ziffernweise in dezimale Ziffern umgewandelt werden. Die letzten Ziffern dieses dezimalen Hashwertes könnten dann die PIN darstellen. Für heutige Bankkarten ist die PIN vierziffrig.

Die PIN erhält der Kunde über das kartenausgebende Unternehmen (beispielsweise über seine Bank). Die PIN kann vom Kunden nicht geändert werden, da die Daten, aus denen seine PIN abgeleitet wird, konstant sind. Die Gültigkeit der ihm somit fest vorgegebenen PIN ist unbeschränkt bzw. nur über die generelle Gültigkeit der Karte beschränkt (die Gültigkeit von Bankkarten beträgt in der Regel mehrere Jahre). Sie ist, wie beschrieben, üblicherweise rein numerisch.

Verliert der Kunde seine Karte, kann er diese über das kartenausgebende Unternehmen sperren lassen. Wenn er nach dem Verlust eine neue Karte erhält, so erhält er auch eine neue PIN, die sich in der Regel von der bisherigen PIN unterscheidet. Auch diese PIN ist wiederum keine Wunsch-PIN des Kunden, sondern vom kartenausgebenden Unternehmen vorgegeben.

Der Nutzer muss sich das Passwort entweder im Gedächtnis merken oder aber es auf logisch u./o. physikalisch sichere Weise deponieren, um Dritten den einfachen Zugriff auf die Information zu verwehren. Denkbar wäre beispielsweise die Niederschrift des Passwortes auf einen Zettel, der anschließend in einem Tresor zu deponieren ist.

Ein Passwort sollte aus Sicherheitsgründen möglichst oft gewechselt werden, weil mit der Zeit die Chance respektive das Risiko steigt, dass ein Dritter - absichtlich oder zufällig - unbefugt Kenntnis des Passwortes erlangt. Empfohlen wird beispielsweise bei Computersystemen meist ein Wechsel etwa alle 30 Tage. Hierbei sollte man das Wiederverwenden von alten Passwörtern genauso wie das mehrfache Benutzen desselben Passwortes auf verschiedenen Konten und/oder Rechnern unterlassen. Einige moderne Betriebssysteme erinnern den Nutzer an den Ablauf der Gültigkeit seines Passwortes und fordern ihn rechtzeitig und ggf. mehrfach in regelmäßigen Abständen (z.B. 8 Tage vorab, 7 Tage vorab, ...) auf, sein Passwort zu wechseln.

In EP 1685471 B1 ist ein Verfahren beschrieben, wie einer Chipkarte eine PIN zugewiesen werden kann, die nicht dauerhaft gültig ist, sondern eine individuelle Gültigkeitsdauer in Abhängigkeit der Güte der PIN haben kann.

Die Veröffentlichung "Omer Berkman et al: "The Unbearable Lightness of PIN Cracking" in Financial Cryptography and Data Security [Lecture Notes in Computer Science] Springer Verlag, Berlin, Heidelberg, Band 4886, 12. Februar 2007, Seiten 224-238 (ISBN: 978-3-540-77365-8); beschreibt zwei Verfahren, das sogenannte IBM 3624 und das VISA PIN Verifikationswert (PVV)-Verfahren, bei denen jeweils ein vier Dezimalziffem umfassender Verifikationswert verwendet wird, der bei dem IBM 3624-Verfahren "Offset" und bei dem VISA-PVV "PIN Verification Value (PW)" genannt wird, siehe D1: S.231 ff. Der Verifikationswert kann in einer Datenbank oder auf der Kundenkarte gespeichert werden und erlaubt einem Kunden, seine PIN zu wechseln. Der Offset V bestimmt sich aus V = P - g(A), wobei P die in einem PIN-Block EPB (Encrypted PIN Block) verschlüsselte PIN, A eine Kontonummer und g eine Funktion ist, die eine vier Dezimalziffern umfassende Nummer berechnet. Der Offset entspricht einem Differenzwert zwischen einer neuen Wunsch-PIN P und der Start-PIN, die aus g(A) ermittelt wird. Damit beschreibt die Veröffentlichung ein Verfahren zur Neuvergabe einer PIN, bei dem ein Differenzwert zwischen Wunsch-PIN und Start-PIN auf dem Hardwaretoken gespeichert wird, um die neue PIN zu ermitteln. Eine ähnliche Offenbarung findet sich in der US 2007/282756 A1, die ebenfalls die Verwendung eines Offsets zur Bestimmung von (neuen) PINs beschreibt.

Nachteilig bei den bekannten Magnetstreifenkarten, Kombikarten und dergleichen ist es, dass die einmal zugewiesene PIN nicht geändert werden kann und somit ein mit fortschreitender Nutzungsdauer steigendes Risiko einer Ausspähung der PIN und einer unbefugten Benutzung der Karte einhergeht.

Die Aufgabe der Erfindung ist es, die genannten Nachteile zu überwinden, das Verfahren der genannten Art derart weiter zu bilden, dass die Beschränkung auf Chipkarten überwunden wird, und es insbesondere zu ermöglichen, die einer Karte mit Magnetstreifen zugewiesene PIN ändern zu können sowie der PIN einer Karte mit Magnetstreifen eine individuelle Gültigkeitsdauer in Abhängigkeit der Güte der PIN zuordnen zu können, d.h. insbesondere die PIN eines beliebigen Hardware-Tokens ändern zu können.

Diese Aufgabe wird erfindungsgemäß durch das in den unabhängigen Ansprüchen angegebene System bzw. Verfahren gelöst.

Vorteilhafte Ausgestaltungen und Weiterbildungen der Erfindung ergeben sich aus den abhängigen Ansprüchen.

Besonders vorteilhaft ist es bei dem erfindungsgemäßen Passwortmanagementsystem zur Änderung und Überprüfung eines Passwortes und Zuweisung dieses Passwortes zu einem Hardwaretoken, insbesondere Magnetstreifenkarte und/oder Chipkarte, wobei das Passwort der Authentifizierung des Hardwaretokens gegenüber einem technischen System dient, wobei das Passwort eine Persönliche Identifikationsnummer PIN ist, und wobei die PIN mittels eines Algorithmus aus Daten, die auslesbar auf dem Hardwaretoken gespeichert sind, ermittelbar ist, ist es, dass zur Änderung der ursprünglichen PIN in eine neue PIN ein Änderungswert auslesbar auf dem Hardwaretoken und/oder in dem Passwortmanagementsystem gespeichert wird, der zur Ermittlung der neuen PIN mittels desselben oder eines anderen Algorithmus dient. Bei einer Kombikarte könnte der Änderungswert prinzipiell auch im Chip gespeichert werden.

Es ist somit möglich, die einer Karte zugewiesene Persönliche Identifikationsnummer, d.h. die PIN, mittels derer verschiedene Applikationen unter Nutzung der Karte authentifiziert und freigegeben werden, ändern zu können.

Bei dem Änderungswert, der auf dem Hardwaretoken und/oder in einer Datenbank des Passwortmanagementsystems gespeichert wird, handelt es sich um den Eingangswert für eine Hashfunktion, mittels der zumindest die neue PIN ermittelt wird.

Bei einer Speicherung des Änderungswertes auf dem Hardwaretoken, beispielsweise auf dem Magnetstreifen bei einer Magnetstreifenkarte oder auf dem Chip einer Chip- oder Kombikarte, ist dieser Änderungswert in vorteilhafter Weise unmittelbar auslesbar. Alternativ oder kumulativ kann dieser Änderungswert auch systemseitig in einer entspechenden Datenbank des Passwortmanagementsystems gespeichert werden. Sofern der Änderungswert ausschließlich systemseitig und nicht zusätzlich auf dem Hardwaretoken gespeichert wird, wird die Sicherheit zusätzlich erhöht, da das Hardwaretoken die entsprechende Information nicht enthält. Wird alternativ dazu der Änderungswert sowohl auslesbar auf dem Hardwaretoken als auch systemseitig in einer Datenbank gespeichert, so wird die Sicherheit durch eine zusätzlich mögliche Prüfung durch einen entsprechenden Abgleich erhöht.

Im Folgenden wird ausgeführt, wie die entsprechenden Merkmale (keine dauerhafte Gültigkeit der PIN, individuelle Gültigkeitsdauer der PIN in Abhängigkeit der Güte der PIN) für Karten mit Magnetstreifen umgesetzt werden können, wobei die Darstellung nur beispielhaft und nicht auf Magnetstreifenkarten beschränkt ist, sondern auf jedes Hardwaretoken anwendbar ist, welches einen beschreibbaren und auslesbaren Datenbereich aufweist, wobei aus dort gespeicherten Daten die PIN abgeleitet wird.

Für die Änderbarkeit der PIN können zwei Verfahren verwendet werden. Das nachfolgend beschriebene Verfahren I ist Stand der Technik:

Verfahren I: Differenzwert im Klartext

Auf dem Magnetstreifen ist zusätzlich ein "Differenzwert" zu speichern, der zunächst den Wert 0, aber auch einen beliebigen kartenindividuelien Wert haben kann.

Differenzwert = 0 entspricht somit der ursprünglichen Start-PIN, die, wie beschrieben, sich aus einem Hashwert von auf dem Magnetstreifen gespeicherten Daten ableitet.

Eine neue PIN und die Start-PIN haben eine gewisse rechnerische Differenz, die erfindungsgemäß als Differenzwert auf dem Magnetstreifen gespeichert wird. Wenn nun der Kunde seine PIN eingibt, so kann offline oder online diese PIN verifiziert werden, wenn dem System neben dem eigentlichen kryptographischen Verfahren sowohl die Daten des Magnetstreifens, aus dem die Start-PIN ermittelt werden kann, als auch der auf dem Magnetstreifen gespeicherte Differenzwert vorliegen. Die eingegebene PIN ist dann korrekt, wenn die Differenz zwischen Eingabewert und Start-PIN (die das System wie bisher berechnet) dem Differenzwert entspricht.

Zur Einrichtung einer neuen PIN muss dem Kunden insofern eine Applikation zum Wechsel seiner PIN (beispielsweise als zusätzlicher Auswahlpunkt bei der Nutzung des Geldausgabeautomaten) zur Verfügung gestellt werden, in deren Verlauf die Start-PIN und die neue PIN verglichen werden und der Differenzwert auf dem Magnetstreifen gespeichert wird.

Die zusätzliche Speicherung des Differenzwertes im Klartext auf dem Magnetstreifen ist sicherheitstechnisch grundsätzlich unbedenklich, solange das Verfahren zur Berechnung der Start-PIN sicher ist. Der Differenzwert selbst liefert einem Angreifer keine zusätzliche Information zur Bestimmung der Start- oder der aktuellen PIN. Nach wie vor ist der Nutzer gehalten, seine nunmehr geänderte PIN geheim zu halten.

Ein Angreifer könnte nur dann aus Kenntnis des Differenzwertes auf die aktuelle PIN schließen, wenn ihm die Start-PIN (Differenzwert = 0) oder allgemein eine frühere PIN mit dem zugehörigen Differenzwert bekannt ist. Insofern sollte der Nutzer diese Informationen entsprechend vertraulich behandeln.

Um an dieser Stelle den Nutzer ein wenig zu entlasten, sollte die erste PIN, die der Kunde von seinem kartenausgebenden Unternehmen erhält, nicht die "Start-PIN" mit Differenzwert = 0, sondern eine andere PIN mit einem individuellen Differenzwert ungleich 0 sein.

Verfahren II: Zusätzlicher Eingangswert für die Hashfunktion

Die Speicherung des Differenzwertes im Klartext auf dem Magnetstreifen ermöglicht allerdings jedermann, diesen auszulesen. Insofern könnte jemand, der die bisherige PIN und den bisherigen Differenzwert kennt, ohne Mühe die neue PIN ermitteln, wenn er zusätzlich auch den neuen Differenzwert kennt.

Um dieses Risiko auszuschließen und die Ableitung der neuen PIN für jemanden, der die alte PIN, die bisherigen Daten auf dem Magnetstreifen und die neuen Daten auf dem Magnetstreifen kennt, zu verhindern, wird das folgende Verfahren vorgeschlagen.

Der Hashwert, aus dem, wie beschrieben, die PIN abgeleitet wird, erhält einen zusätzlichen Eingangswert, der auf dem Magnetstreifen zu speichern ist. Für die Start-PIN habe dieser Eingangswert den Wert 0 oder einen anderen Startwert. Der Eingangswert kann kundenindividuell sein.

Auf Grund der Systematik einer Hashfunktion führt ein geänderter Eingangswert in der Regel auch zu einer geänderten PIN. Bei einer adäquat gewählten Hashfunktion sind die Werte gleichverteilt, jede PIN ist somit gleich wahrscheinlich. Wenn die PIN nun relativ kurz ist (etwa nur 4-ziffrig) und die Rechenkapazität besteht, zu vielen Eingangswerten die zugehörige PIN zu ermitteln, ist die Wahrscheinlichkeit sehr hoch, bei gleich verteilten Hashwerten zu einer gewünschten PIN auch einen passenden Eingangswert zu finden. Bei einer 4-stelligen PIN, d.h. bei 10000 unterschiedlichen Werten für die PIN, und bei 100000 Versuchen mit unterschiedlichen Eingangswerten ist für eine Hashfunktion mit gleichverteilten Hashwerten die Wahrscheinlichkeit > 99.99%, dass einer der Versuche zur gewünschten PIN führt.

Zur Einrichtung einer neuen PIN muss dem Kunden insofern eine Applikation zum Wechsel seiner PIN (beispielsweise als zusätzlichen Auswahlpunkt bei der Nutzung des Geldausgabeautomaten) zur Verfügung gestellt werden. In deren Verlauf gibt der Kunde seine Wunsch-PIN ein. Die Applikation durchläuft nun die Hashfunktion mit immer wieder geänderten Eingangswerten solange, bis ein passender Eingangswert zur gewünschten PIN gefunden ist. Dieser Eingangswert wird auf dem Magnetstreifen gespeichert. Der Kunde erhält eine entsprechende positive Systemmeldung. Sollte die Applikation in einem für den Kunden akzeptablen Zeitraum keinen passenden Eingangswert finden, so erhält der Kunde eine entsprechende Fehlermeldung. Alternativ kann die Applikation dem Kunden mehrere neue PIN vorschlagen, zu denen sie bei den vorherigen Berechnungen Eingangswerte gefunden hat. Der Kunde kann dann eine dieser ihm vorgeschlagenen PIN als seine neue PIN wählen. Der zugehörige Eingangswert wird auf dem Magnetstreifen gespeichert.

Beide-Verfahren ermöglichen eine Änderbarkeit der PIN einer Karte mit Magnetstreifen.

Wenn der Differenzwert aus Verfahren I bzw. der Eingangswert aus Verfahren II nicht auf dem Magnetstreifen, sondern systemseitig gespeichert werden, ist ebenso eine Änderbarkeit der PIN gegeben. Als Vorteil ergibt sich eine höhere Sicherheit, da einem Dritten, der nur die Daten des Magnetstreifens kennt, Differenzwert bzw. Eingangswert verborgen bleiben. Als Nachteil ergibt sich die Notwendigkeit, systemseitig eine Datenbank zu führen, in der je Kunde der zugehörige Differenzwert bzw. Eingangswert gespeichert sind, wobei diese Datenbank bei jeder PIN-Überprüfung anzusprechen ist.

Statt systemseitig eine Datenbank zu führen und entsprechend der vorstehenden Beschreibung vorzugehen, ist es auch möglich, den Änderungswert auf dem Chip einer Kombikarte, die sowohl einen Chip als auch einen Magnetstreifen aufweist, zu speichern. Es besteht dann die Möglichkeit, die entsprechenden Daten auszulesen und systemseitig auszuwerten, oder mittels des Chips die Datenauswertung, d.h. die Ermittlung der PIN durchzuführen.

Magnetstreifenkarten haben niemals einen internen Timer. Eine solche Steuerung der Gültigkeit der PIN entfällt somit. Wenn jedoch eine systemseitige Datenbank zur Verfügung steht, kann als Zähler im Sinne von EP 1685471 B1 für Chipkarten beispielsweise die Anzahl der PIN-Eingaben im System gespeichert werden. Wenn der Zähler einen gewissen Grenzwert erreicht oder überschritten hat, wird die PIN ungültig, die Applikation fordert den Nutzer zum Wechsel der PIN auf. Ebenso wie in Bezug auf Chipkarten in EP 1685471 B1 erläutert kann hier eine bessere PIN (beispielsweise eine sechs- statt einer vierstelligen PIN) zu einem höheren Grenzwert führen, um dem Nutzer einen Anreiz zu geben, eine bessere PIN zu wählen.

Wenn im System der Zeitpunkt der letzten PIN-Änderung erfasst werden kann, so kann alternativ zum beschriebenen Zähler im System dort die Gültigkeit der PIN durch Auswertung der Zeit kontrolliert werden. Die maximale Gültigkeitsdauer der PIN kann wiederum, wie oben beschrieben, in Abhängigkeit der Güteklasse der PIN festgelegt werden.

Weder die oben beschriebenen Zähler (Anzahl der PIN-Eingaben o.ä.) noch der beschriebene Zeitpunkt (letzte PIN-Änderung o.ä.) sollten ausschließlich direkt auf dem Magnetstreifen der Karte erfasst werden. Eine Auswertung dieser Daten würde dann zu Fehlern bzw. zu Sicherheitsproblemen führen, da die Daten für jedermann veränderbar sind. Insofern sind eine geschützte Erfassung und Auswertung des Zählers bzw. des Zeitpunktes systemseitig oder auch im Chip einer Kombikarte unabdingbar zur Gewährleistung eines verlässlichen Verfahrens.

Auch wenn nach einem Kartenwechsel etwa wegen Verlustes der bisherigen Karte der Nutzer eine neue PIN, die sich von der PIN der bisherigen Karte unterscheiden kann, erhält, kann der Nutzer diese nunmehr seinen Wünschen gemäß ändern, beispielsweise auf die PIN seiner vorherigen Karte.

Der Benutzer eines Datenverarbeitungssystems oder einer Anwendung definiert bei erstmaliger Anmeldung ein Passwort (PIN) seiner Wahl. Das System ermittelt auf Basis einer internen Bewertungsfunktion (Evaluationsfunktion) automatisch das Sicherheitsniveau des Passwortes.

In bevorzugter Weise wird das Sicherheitsniveau des numerischen Passwortes für eine Karte mit Magnetstreifen individuell insbesondere anhand von einem oder mehreren der folgenden Kriterien bestimmt: der Länge des Passworts, der Art und Wiederholanzahl der verwendeten Ziffern. Spezielle Bilder des Passwortes (z.B. 4711, 0815) oder Übereinstimmungen des Passwortes mit Stammdaten des Nutzers (z.B. Passwort 0405 eines Kunden, der am 04. Mai geboren ist) können weitere Kriterien sein.

Das System kann in Abhängigkeit des ermittelten Sicherheitsniveaus des Passwortes automatisch die Gültigkeitsdauer dieses Passwortes ermitteln. Das heißt, sehr sichere Passwörter dürfen z.B. einige Monate, weniger sichere Passwörter z.B. gar nicht oder nur einige Tage oder Wochen genutzt werden.

Die Gültigkeitsdauer des Passwortes wird nicht für alle Nutzer und alle möglichen Passwörter konstant, z. B. vier Wochen, sondern individuell in Abhängigkeit von der Güte des Passwortes festgelegt.

Optional ist vorgesehen, dass der Benutzer rechtzeitig, in der Regel kurz vor dem Ablauf der Gültigkeitsdauer des Passwortes vom System automatisch aufgefordert werden kann, sein Passwort zu wechseln und ein neues Passwort zu kreieren. Ebenso kann der Nutzer zu jedem beliebigem Zeitpunkt auf eigenen Wunsch sein Passwort wechseln.

Durch das erfindungsgemäße Verfahren wird es erreicht, dass der Nutzer der Karte seine PIN nicht nur wechseln kann, sondern wechseln muss und hierbei einen Anreiz erhält, eine sichere(re) PIN zu wählen:

Zwei Ausführungsbeispiele der Erfindung sind in den Figuren schematisch dargestellt und werden nachfolgend erläutert. Es zeigen:

Fig. 1    eine erste Magnetstreifenkarte;

Fig. 2    eine zweite Magnetstreifenkarte.

Die in den Figuren dargestellte Magnetstreifenkarte 1 weist einen Magnetstreifen 2 auf, auf dem Daten speicherbar und auslesbar sind. Aus den vom Magnetstreifen 2 ausgelesenen Daten ist mittels einer Hashfunktion h, die auf die Daten angewendet wird, die Persönliche Identifikationsnummer PIN ermittelt.

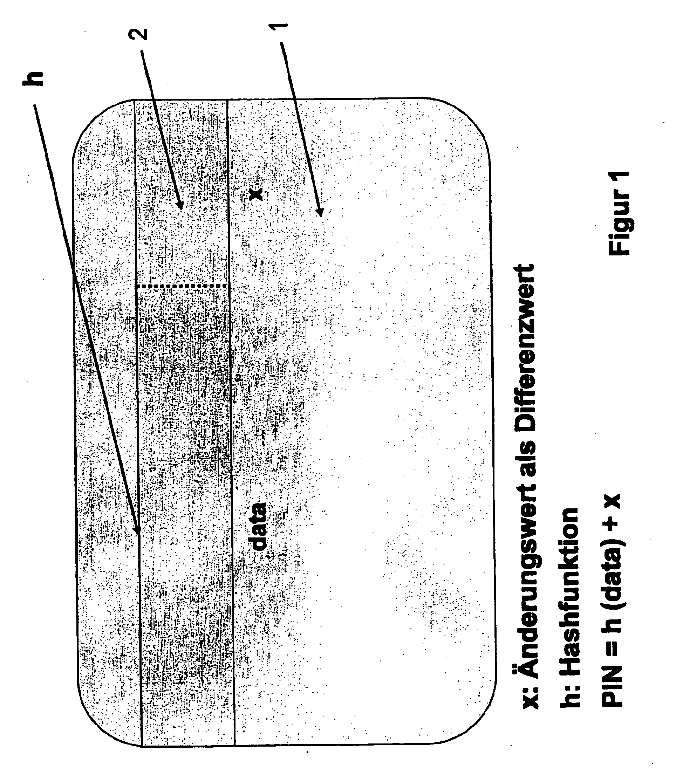

Bei dem Ausführungsbeispiel nach Figur 1 wird auf dem Magnetstreifen 2 der Magnetstreifenkarte 1 neben einem ersten Datenfeld, welches die Daten (data) enthält, ein Änderungswert x nach der Durchführung der Änderung der PIN auf einem zweiten Datenfeld des Magnetstreifens 2 gespeichert, wobei der Änderungswert x einen Differenzwert zwischen bisheriger und geänderter PIN bildet. Die geänderte PIN wird mittels der Hashfunktion h aus auf der Karte 1 gespeicherten Daten (data) und anschließender Berücksichtung des Differenzwertes x nach folgender Formel berechnet:

$$PIN = h\ (data) + x$$

wobei

PIN = Persönliche Identifikationsnummer
h = Hashfunktion zur Berechnung der PIN
data = Daten als Eingangswerte für h
x = Änderungswert als Differenzwert

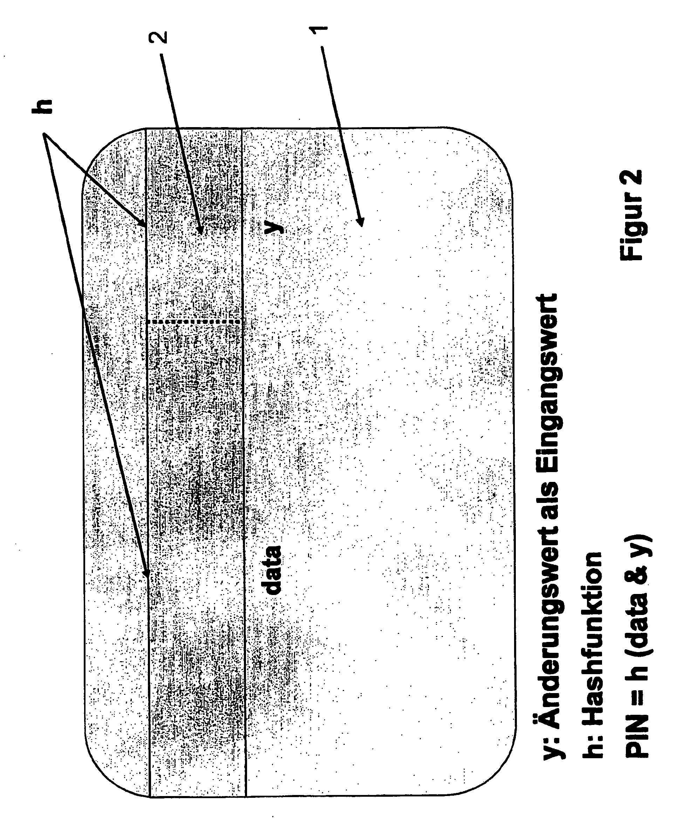

Bei dem zweiten Ausführungsbeispiel gemäß Figur 2 wird auf dem Magnetstreifen 2 der Magnetstreifenkarte 1 neben einem ersten Datenfeld, welches die Daten (data) enthält, ein Änderungswert y nach der Durchführung der Änderung der PIN auf einem zweiten Datenfeld des Magnetstreifens 2 gespeichert, wobei der Änderungswert y einen Eingangswert bildet. Die geänderte PIN wird mittels der Hashfunktion h aus auf der Karte 1 gespeicherten Daten (data), ergänzt um den Änderungswert y, nach folgender Formel berechnet:

$$PIN = h(data, y)$$

Wobei

PIN = Persönliche Identifikationsnummer
h = Hashfunktion zur Berechnung der PIN
data = Daten als Eingangswerte für h
y = Änderungswert als zusätzlicher Eingangswert für h

**Patentansprüche**

1. Passwortmanagementsystem zur Änderung und Überprüfung eines Passwortes und Zuweisung dieses Passwortes zu einem Hardwaretoken, insbesondere Magnetstreifenkarte und/oder Chipkarte, wobei das Passwort der Authentifizierung des Hardwaretokens gegenüber einem technischen System dient und das Passwort eine Persönliche Identifikationsnummer PIN ist, die mittels einer Hashfunktion h aus Daten data, die auslesbar auf dem Hardwaretoken gespeichert sind, ermittelbar ist, und wobei zur Änderung der ursprünglichen PIN in eine neue PIN ein Änderungswert y in dem Passwortmanagementsystem und/oder auslesbar auf dem Hardwaretoken gespeichert wird, der zur Ermittlung der neuen PIN mittels derselben Hashfunktion h dient, **dadurch gekennzeichnet, dass** es sich bei dem Änderungswert y um einen zusätzlichen Eingangswert für die Hashfunktion handelt, mittels der die neue PIN als PIN = h(data,y) ermittelbar ist, wobei das Passwortmanagementsystem eine Applikation aufweist, die dazu eingerichtet ist, nach Vorgabe der neuen PIN die Hashfunktion mit immer wieder geänderten Eingangswerten solange zu durchlaufen, bis ein passender Eingangswert zu der neuen PIN gefunden ist, und diesen Eingangswert abzuspeichern.

2. System nach einem Anspruch 1, **dadurch gekennzeichnet, dass** die PIN nicht auf dem Hardwaretoken gespeichert ist.

3. System nach Anspruch 1 oder 2, **dadurch gekennzeichnet, dass** es sich bei dem Hardwaretoken um eine Magnetstreifenkarte oder eine Chipkarte oder eine Kombinationskarte mit Magnetstreifen und Chip handelt, wobei der Hardwaretoken zumindest einen beschreibbaren und auslesbaren Datenbereich für die PIN-bestimmenden Daten und den Änderungswert aufweist.

4. System nach Anspruch 2, **dadurch gekennzeichnet, dass** die Datenbereiche für die PIN-bestimmenden Daten und den Änderungswert keinen Schutzmechanismus aufweisen und somit von Dritten beschreibbar oder auslesbar sind.

5. System nach Anspruch 2, **dadurch gekennzeichnet, dass** der Datenbereich für die PIN-bestimmenden Daten keinen Schutzmechanismus aufweist und somit von Dritten beschreibbar oder auslesbar ist, und dass der Datenbereich für den Änderungswert geschützt ist und von Dritten nicht ohne Weiteres beschrieben oder gelesen werden kann.

6. System nach einem der vorherigen Ansprüche, **dadurch gekennzeichnet, dass** das Passwortmanagementsystem für jedes Passwort eine individuelle Gültigkeitsdauer in Abhängigkeit von bestimmten Kriterien implementiert und das Passwort mit der individuell festgelegten Gültigkeitsdauer dem Benutzer zuweist.

7. System nach einem der vorherigen Ansprüche, **dadurch gekennzeichnet, dass** eine Bewertungsfunktion für ein vom Benutzer eingegebenes Passwort ein Sicherheitsniveau anhand vorgegebener Kriterien bestimmt, dem Passwort eine dem Sicherheitsniveau zugeordnete Güteklasse zuweist und die individuelle Gültigkeitsdauer des Passwortes in Abhängigkeit des dem Passwort zugewiesenen Sicherheitsniveaus bzw. der dem Passwort zugewiesenen Güteklasse festlegt, insbesondere dass die dem Passwort zugewiesene Gültigkeitsdauer umso länger ist, je höher die Güteklasse des Passwortes ist.

8. System nach einem der vorherigen Ansprüche, **dadurch gekennzeichnet, dass** der Zeitpunkt der letzten Änderung der PIN in dem System und/oder in einem geschützten Datenbereich des Hardwaretokens gespeichert wird, insbesondere von Dritten nicht ohne Weiteres beschrieben oder gelesen werden kann.

9. System nach einem der vorherigen Ansprüche, **dadurch gekennzeichnet, dass** die Gültigkeitsdauer der PIN der Magnetstreifenkarte begrenzt ist, indem ein Zähler innerhalb des Systems und/oder ein Zähler in einem geschützten Datenbereich des Hardwaretokens, insbesondere ein Zähler für die Anzahl der bisherigen Eingaben einer korrekten PIN, einen zahlenmäßigen Grenzwert erreicht oder überschreitet.

10. System nach einem der vorherigen Ansprüche, **dadurch gekennzeichnet, dass** die Kriterien zur Bestimmung der Güteklasse eines Passworts einen oder mehrere der folgenden Parameter umfassen:

Anzahl der verwendeten Zeichen, Anzahl der wiederholt verwendeten Zeichen, Art der verwendeten Zeichen, Stammdaten des Nutzers, insgesamt oder von Teilen des Passwortes.

11. System nach einem der vorherigen Ansprüche, **dadurch gekennzeichnet, dass** es die Gültigkeitsdauer der PIN der Magnetstreifenkarte als Zeitintervall oder mittels individueller Festlegung des zahlenmäßigen Grenzwertes in Abhängigkeit der Güte der gewählten rein numerischen PIN festlegt.

12. System nach einem der vorherigen Ansprüche, dadurch gekehnzeichnet, dass es Passwörter, die eine minimale, vorgegebene Güteklasse unterschreiten, automatisch zurückweist.

13. System nach einem der vorherigen Ansprüche, **dadurch gekennzeichnet, dass** es dem Benutzer vor der Zuweisung des Passwortes dessen ermittelte Güteklasse und/oder Gültigkeitsdauer anzeigt, und der Benutzer individuell an Hand der Güteklasse und/ode Gültinkeitsdauer entscheiden kann, ob er das Passwort nutzen will oder nicht.

14. System nach einem der vorherigen Ansprüche, **dadurch gekennzeichnet, dass** generell oder nur bei einer systemseitig nicht möglichen vom Benutzer gewünschten neuen PIN eine oder mehrere alternative neue PIN vorgeschlagen werden und auswählbar sind.

15. System nach einem der vorherigen Ansprüche, **dadurch gekennzeichnet, dass** es automatisch die Passwort-Vergangenheit des Benutzers überprüft, indem es das aktuelle Passwort mit den letzten x Passwörtern des Benutzers und/oder den Passwörtern des Benutzers aus dem vergangenen Zeitraum y oder einer Kombination hiervon vergleicht.

16. System nach einem der vorherigen Ansprüche, **dadurch gekennzeichnet, dass** es den Benutzer rechtzeitig, vorzugweise kurz vor dem Ablauf der Gültigkeitsdauer des Passwortes automatisch auffordert, ein neues Passwort seiner Wahl zu definieren.

17. System nach einem der vorherigen Ansprüche, **dadurch gekennzeichnet, dass** der Benutzer vom Passwortmanagementsystem vor oder während der Eingabe allgemeine Hinweise zur Generierung eines sicheren Passworts erhält.

18. System nach einem der vorherigen Ansprüche, **dadurch gekennzeichnet, dass** es dem Benutzer kommuniziert, dass Passwörter mit hoher Güteklasse eine längere Gültigkeitsdauer aufweisen als Passwörter mit einer niedrigen Güteklasse.

19. System nach einem der vorherigen Ansprüche, **dadurch gekennzeichnet, dass** es Teil eines Datenverarbeitungssystems oder einer Anwendung ist und auf Hardware und/oder Software basiert.

20. System nach einem der vorherigen Ansprüche, **dadurch gekennzeichnet, dass** bei dem Hardwaretoken durch die zugehörige Applikation, die einen Zähler und/oder andere Parameter, insbesondere die Zeit, auswertet, der Nutzer aufgefordert wird, die PIN zu wechseln.

21. System nach einem der vorherigen Ansprüche, **dadurch gekennzeichnet, dass** die Applikation dazu eingerichtet ist, mehrere neue PIN vorzuschlagen, zu denen sie bei den vorherigen Berechnungen Eingangswerte gefunden hat, wobei eine dieser vorgeschlagenen PIN als neue PIN auswählbar ist.

22. Verfahren für ein Passwortmanageme zur Änderung und Überprüfung eines Passwortes und Zuweisung dieses Passwortes zu einem Hardwaretoken, insbesondere einer Magnetstreifenkarte und/oder einer Chipkarte, wobei das Passwort der Authentifizierung des Hardwaretokens gegenüber einem technischen System dient, und das Passwort eine Persönliche Identifikationsnummer PIN ist, die mittels einer Hashfunktion h aus Daten data, die auslesbar auf dem Hardwaretoken gespeichert sind, ermittelt und überprüft wird, und wobei zur Änderung der ursprünglichen PIN in eine neue PIN ein Änderungswert y auslesbar auf dem Hardwaretoken und/oder systemseitig in einer Datenbank gespeichert wird, der zur Ermittlung und Überprüfung der neuen PIN mittels derselben Hashfunktion h dient, **dadurch gekennzeichnet, dass** es sich bei dem Änderungswert y um einen zusätzlichen Eingangswert für die Hashfunktion handelt, mittels der zumindest die neue PIN als PIN = h(data,y) ermittelt wird, wobei das Passwortmanagementsystem eine Applikation aufweist, die nach Vorgabe der neuen PIN die Hashfunktion mit immer wieder geänderten Eingangswerten solange durchläuft, bis ein passender Eingangswert zu der neuen PIN gefunden ist, und diesen Eingangswert abspeichert.

23. Verfahren nach Anspruch 22, **dadurch gekennzeichnet, dass** für jedes Passwort eine individuelle Gültigkeitsdauer in Abhängigkeit von bestimmten Kriterien implementiert und das Passwort mit der individuell festgelegten Gültigkeitsdauer dem Hardwaretoken zugewiesen wird.

24. Verfahren nach Anspruch 22 oder 23, **dadurch gekennzeichnet, dass** mittels einer Bewertungsfunktion für ein vom Benutzer eingegebenes Passwort ein Sicherheitsniveau anhand vorgegebener Kriterien bestimmt und dem Passwort eine dem Sicherheitsniveau zugeordnete Güteklasse zugewiesen wird und die individuelle Gültigkeitsdauer des Passwortes in Abhängigkeit des dem Passwort zugewiesenen Sicherheitsniveaus bzw. der dem Passwort zugewiesenen Güteklasse festlegt wird.

25. Verfahren nach einem der Ansprüche 22 bis 24, **dadurch gekennzeichnet, dass** die Gültigkeitsdauer der PIN des Hardwaretokens begrenzt wird, in dem ein Zähler, insbesondere ein Zähler für die Anzahl der bisherigen Eingaben einer korrekten PIN, einen zahlenmäßigen Grenzwert erreicht oder überschreitet.

26. Verfahren nach einem der Ansprüche 22 bis 25, **dadurch gekennzeichnet, dass** die Applikation mehrere neue PIN vorschlägt, zu denen sie bei den vorherigen Berechnungen Eingangswerte gefunden hat, wobei eine dieser vorgeschlagenen PIN als neue PIN auswählbar ist.

**Claims**

1. Password management system for changing and checking a password and assigning this password to a hardware token, particularly a magnetic strip card and/or chip card, wherein the password is used to authenticate the hardware token to a technical system and the password is a personal identification number PIN which can be ascertained by means of a hash function h from data which are stored in readable form on the hardware token, and wherein to change the original PIN to a new PIN a change value y is stored in the password management system and/or in readable form on the hardware token and is used to ascertain the new PIN by means of the same hash function h, **characterized in that** the change value y is an additional input value for the hash function which can be used to ascertain the new PIN as PIN = h(data, y), wherein the password management system has an application which is set up so as, when the new PIN has been prescribed, to perform the hash function with repeatedly changed input values until a fitting input value for the new PIN is found, and to store this input value.

2. System according to Claim 1, **characterized in that** the PIN is not stored on the hardware token.

3. System according to Claim 1 or 2, **characterized in that** the hardware token is a magnetic strip card or a chip card or a combination card with a magnetic strip and a chip, wherein the hardware token has at least one writable and readable data area for the PIN-determining data and the change value.

4. System according to Claim 2, **characterized in that** the data areas for the PIN-determining data and the change value have no protection mechanism and hence can be written to or read by third parties.

5. System according to Claim 2, **characterized in that** the data area for the PIN-determining data has no protection mechanism and hence can be written to or read by third parties, and **in that** the data area for the change value is protected and cannot readily be written to or read by third parties.

6. System according to one of the preceding claims, **characterized in that** the password management system implements, for each password, an individual validity period on the basis of particular criteria and assigns the password having the individually stipulated validity period to the user.

7. System according to one of the preceding claims, **characterized in that** a rating function for a password that is input by the user determines a security level using prescribed criteria, assigns the password a quality class associated with the security level and stipulates the individual validity period of the password on the basis of the security level assigned to the password or the quality class assigned to the password, particularly **in that** the validity period assigned to the password is longer the higher the quality class of the password.

8. System according to one of the preceding claims, **characterized in that** the time of the last PIN change is stored in the system and/or in a protected data area of the hardware token, in particular cannot readily be written to or read by third parties.

9. System according to one of the preceding claims, **characterized in that** the validity period of the PIN of the magnetic strip card is limited by virtue of a counter within the system and/or a counter in a protected data area of the hardware token, particularly a counter for the number of previous inputs of a correct PIN, reaching or exceeding a numerical limit value.

10. System according to one of the preceding claims, **characterized in that** the criteria for determining the quality class of a password comprise one or more of the following parameters: number of characters used, number of characters used repeatedly, type of characters used, master data for the user, as a whole or from portions of the password.

11. System according to one of the preceding claims, **characterized in that** it stipulates the validity period of the PIN of the magnetic strip card as a time interval or by means of individual stipulation of the numerical limit value on the basis of the quality of the chosen purely numeric PIN.

12. System according to one of the preceding claims, **characterized in that** it automatically rejects passwords which are below a minimum, prescribed quality class.

13. System according to one of the preceding claims, **characterized in that** it indicates to the user, prior to the assignment of the password, the ascertained quality class and/or validity period of said password, and the user can use the quality class and/or validity period to individually decide whether or not he wishes to use the password.

14. System according to one of the preceding claims, **characterized in that** generally, or only when a new PIN which the user desires is not possible on the system, one or more alternative new PINs are proposed and can be selected.

15. System according to one of the preceding claims, **characterized in that** it automatically checks the password history of the user by comparing the current password with the last x passwords of the user and/or the passwords of the user from the past period of time y or a combination of these.

16. System according to one of the preceding claims, **characterized in that** it automatically asks the user to define a new password of his choice in good time, preferably shortly before the validity period of the password expires.

17. System according to one of the preceding claims, **characterized in that** the user receives general guidelines for generating a secure password from the password management system before or during the input.

18. System according to one of the preceding claims, **characterized in that** it communicates to the user that passwords having a high quality class have a longer validity period than passwords having a low quality class.

19. System according to one of the preceding claims, **characterized in that** it is part of a data processing system or an application and is based on hardware and/or software.

20. System according to one of the preceding claims, **characterized in that** in the case of the hardware token the associated application which evaluates a counter and/or other parameters, particularly the time, asks the user to change the PIN.

21. System according to one of the preceding claims, **characterized in that** the application is set up to propose a plurality of new PINs for which it has found input values during the preceding calculations, one of these proposed PINs being able to be selected as a new PIN.

22. Method for password management for changing and checking a password and assigning this password to a hardware token, particularly a magnetic strip card and/or a chip card, wherein the password is used to authenticate the hardware token to a technical system, and the password is a personal identification number PIN which is ascertained and checked by means of a hash function h comprising data which are stored in readable form on the hardware token, and wherein to change the original PIN to a new PIN a change value y is stored in readable form on the hardware token and/or on the system in a database and is used to ascertain and check the new PIN by means of the same hash function h, **characterized in that** the change value y is an additional input value for the hash function which is used to ascertain at least the new PIN as PIN = h (data, y), wherein the password management system has an application which, when the new PIN has been prescribed, performs the hash function with repeatedly changed input values until a fitting input value for the new PIN is found, and stores this input value.

23. Method according to Claim 22, **characterized in that** for each password an individual validity period is implemented on the basis of particular criteria and the password having the individually stipulated validity period is assigned to the hardware token.

24. Method according to Claim 22 or 23, **characterized in that** a rating function for a password that is input by the user is used to determine a security level using prescribed criteria, and the password is assigned a quality class associated with the security level, and the individual validity period of the password is stipulated on the basis of the security level assigned to the password or the quality class assigned to the password.

25. Method according to one of Claims 22 to 24, **characterized in that** the validity period of the PIN of the hardware token is limited by virtue of a counter, particularly a counter for the number of previous inputs of a correct PIN, reaching or exceeding a numerical limit value.

26. Method according to one of Claims 22 to 25, **characterized in that** the application proposes a plurality of new PINs for which it has found input values during the preceding calculations, one of these proposed PINs being able to be selected as a new PIN.

**Revendications**

1. Système de gestion de mot de passe destiné à modifier et à vérifier un mot de passe et à affecter ce mot de passe à un jeton matériel, notamment à une carte à bande magnétique et/ou à une carte à puce, dans lequel le mot de passe est utilisé pour authentifier le jeton matériel par rapport à un système technique et le mot de passe est un numéro d'identification personnel ou code PIN qui peut être déterminé au moyen d'une fonction de hachage "h" à partir de données "data" qui sont stockées de manière à pouvoir être lues sur le jeton matériel, et dans lequel, pour transformer le code PIN initial en un nouveau code PIN, une valeur de modification "y" est stockée dans le système de gestion de mot de passe et/ou peut être lue sur le jeton matériel, laquelle valeur permet de déterminer le nouveau code PIN au moyen de cette même fonction de hachage "h", **caractérisé en ce que** la valeur de modification "y" est une valeur de départ supplémentaire pour la fonction de hachage, au moyen de laquelle le nouveau code PIN peut être déterminé conformément à PIN=h(data, y), dans lequel le système de gestion de mot de passe comprend une application qui est conçue pour exécuter la fonction de hachage après saisie du nouveau code PIN en utilisant des valeurs d'entrée modifiées de manière répétitive jusqu'à ce qu'une valeur d'entrée acceptable pour le nouveau code PIN soit trouvée, et pour mémoriser cette valeur d'entrée.

2. Système selon la revendication 1, **caractérisé en ce que** le code PIN n'est pas mémorisé sur le jeton matériel.

3. Système selon la revendication 1 ou 2, **caractérisé en ce que** le jeton matériel est une carte à bande magnétique ou une carte à puce ou une carte combinée comportant des bandes magnétiques et une puce, dans lequel le jeton matériel comprend au moins une zone de données accessible en écriture et en lecture destinée aux données déterminant le code PIN et la valeur de modification.

4. Système selon la revendication 2, **caractérisé en ce que** les zones de données destinées aux données déterminant le code PIN et la valeur de modification ne comprennent pas de mécanisme de protection et sont par conséquent accessibles en écriture ou en lecture par des tiers.

5. Système selon la revendication 2, **caractérisé en ce que** la zone de données destinée aux données déterminant le code PIN ne comprend pas de mécanisme de protection et peut donc être accessible en écriture ou en lecture par des tiers, et **en ce que** la zone de données destinée à la valeur de modification est protégée et ne peut pas être facilement accessible en écriture ou en lecture.

6. Système selon l'une quelconque des revendications précédentes, **caractérisé en ce que** le système de gestion de mot de passe met en oeuvre une période de validité individuelle en fonction de critères déterminés et **en ce que** le mot de passe alloue à l'utilisateur la période de validité fixée individuellement.

7. Système selon l'une quelconque des revendications précédentes, **caractérisé en ce qu'**une fonction d'évaluation détermine, pour un mot de passe saisi par l'utilisateur, un niveau de sécurité sur la base de critères prédéterminés, **en ce qu'**elle affecte au mot de passe une classe de qualité associée au niveau de sécurité et **en ce qu'**elle fixe la période de validité individuelle du mot de passe en fonction du niveau de sécurité affecté au mot de passe ou de la classe de qualité affectée au mot de passe, notamment en ce que la période de validité affectée au mot de passe est d'autant plus longue que la classe de qualité du mot de passe est élevée.

8. Système selon l'une quelconque des revendications précédentes, **caractérisé en ce que** l'instant de la dernière modification du code PIN dans le système et/ou dans une zone de données protégée du jeton matériel est stocké, et ne peut notamment pas être facilement accessible en écriture ou en lecture par des tiers.

9. Système selon l'une quelconque des revendications précédentes, **caractérisé en ce que** la période de validité du code PIN de la carte à bande magnétique est limitée lorsqu'un compteur présent dans le système et/ou par le fait qu'un compteur présent dans une zone de données protégée du jeton matériel, notamment un compteur destiné au comptage des saisies précédentes d'un code PIN correct, atteint ou dépasse une valeur numérique limite.

10. Système selon l'une quelconque des revendications précédentes, **caractérisé en ce que** les critères de détermination de la classe de qualité d'un mot de passe comprennent un ou plusieurs des paramètres suivants : le nombre de caractères utilisés, le nombre de caractères utilisés de manière répétée, le type des caractères utilisés, les données de base de l'utilisateur, la totalité ou des parties du mot de passe.

11. Système selon l'une quelconque des revendications précédentes, **caractérisé en ce que** la période de validité du code PIN de la carte à bande magnétique est fixée sous la forme d'un intervalle de temps ou par détermination individuelle de la valeur limite numérique en fonction de la qualité du code PIN purement numérique sélectionné.

**12.** Système selon l'une quelconque des revendications précédentes, **caractérisé en ce qu'**il refuse automatiquement des mots de passe qui sont inférieurs à une classe de qualité minimale prédéterminée.

**13.** Système selon l'une quelconque des revendications précédentes, **caractérisé en ce qu'**il indique à l'utilisateur, avant l'affectation du mot de passe, sa classe de qualité et/ou sa période de validité, et **en ce que** l'utilisateur peut décider individuellement, sur la base de la classe de qualité et/ou de la période de validité s'il souhaite ou non utiliser le mot de passe.

**14.** Système selon l'une quelconque des revendications précédentes, **caractérisé en ce que**, de manière générale ou seulement lorsqu'un nouveau code PIN souhaité par l'utilisateur n'est pas possible du point de vue du système, un ou plusieurs autres nouveaux codes PIN sont proposés et peuvent être sélectionnés.

**15.** Système selon l'une quelconque des revendications précédentes, **caractérisé en ce qu'**il vérifie automatiquement l'historique des mots de passe de l'utilisateur en comparant le mot de passe actuel aux "x" derniers mots de passe de l'utilisateur et/ou aux mots de passe de l'utilisateur provenant d'une période de temps "y" s'étant écoulée ou à une combinaison de ceux-ci.

**16.** Système selon l'une quelconque des revendications précédentes, **caractérisé en ce qu'**il propose automatiquement à l'utilisateur à un moment approprié, de préférence peu de temps avant l'expiration de la période de validité du mot de passe, de définir un nouveau mot de passe de son choix.

**17.** Système selon l'une quelconque des revendications précédentes, **caractérisé en ce que** l'utilisateur reçoit du système de gestion de mot de passe, avant ou pendant la saisie, des indications pour la génération d'un mot de passe sécurisé.

**18.** Système selon l'une quelconque des revendications précédentes, **caractérisé en ce qu'**il signale à l'utilisateur que des mots de passe dont la classe de qualité est plus élevée présentent une période de validité plus longue que des mots de passe dont la classe de qualité est plus faible.

**19.** Système selon l'une quelconque des revendications précédentes, **caractérisé en ce qu'**il fait partie d'un système de traitement de données ou d'une application et **en ce qu'**il est à base de matériel et/ou de logiciel.

**20.** Système selon l'une quelconque des revendications précédentes, **caractérisé en ce que** l'utilisateur est invité à changer de code PIN avec le jeton matériel au moyen de l'application correspondante, qui évalue un compteur et/ou d'autres paramètres, notamment le temps.

**21.** Système selon l'une quelconque des revendications précédentes, **caractérisé en ce que** l'application est conçue pour proposer une pluralité de nouveaux codes PIN pour lesquels elle a trouvé des valeurs d'entrée lors des calculs précédents, dans lequel l'un de ces codes PIN proposés peut être sélectionné en tant que nouveau code PIN.

**22.** Procédé de gestion de mot de passe destiné à modifier et à vérifier un mot de passe et à affecter ce mot de passe à un jeton matériel, notamment à une carte à bande magnétique et/ou à une carte à puce, dans lequel le mot de passe est utilisé pour authentifier le jeton matériel par rapport à un système technique et le mot de passe étant un numéro d'identification personnel ou code PIN qui est déterminé et vérifié au moyen d'une fonction de hachage "h" à partir de données "data" qui sont stockées de manière à pouvoir être lues sur le jeton matériel, et dans lequel, pour transformer le code PIN initial en un nouveau code PIN, une valeur de modification "y" est stockée de manière à pouvoir être lue sur le jeton matériel et/ou dans une banque de données du côté système, laquelle valeur permet de déterminer et de tester le nouveau code PIN au moyen de cette même fonction de hachage "h", **caractérisé en ce que** la valeur de modification "y" est une valeur d'entrée supplémentaire de la fonction de hachage, au moyen de laquelle le nouveau code PIN est déterminé sous la forme PIN=h(data,y), dans lequel le système de gestion de mot de passe comprend une application exécutant la fonction de hachage après saisie du nouveau code PIN en utilisant des valeurs d'entrée modifiées de manière répétitive jusqu'à ce qu'une valeur d'entrée acceptable pour le nouveau PIN soit trouvée, et mémorise cette valeur d'entrée.

**23.** Procédé selon la revendication 22, **caractérisé en ce que** pour chaque mot de passe, une période de validité individuelle est mise en oeuvre en fonction de critères déterminés et le mot de passe est affecté au jeton matériel avec la période de validité fixée individuellement.

**24.** Procédé selon la revendication 22 ou 23, **caractérisé en ce qu'**un niveau de sécurité est déterminé sur la base de critères prédéterminés au moyen d'une fonction d'évaluation pour un mot de passe saisi par l'utilisateur, **en ce qu'**une classe de qualité associée au niveau de sécurité est affectée au mot de passe et **en ce que** la période de validité individuelle du mot de passe est fixée en fonction du niveau de sécurité affecté au mot de passe ou de la classe de qualité affectée au mot de passe.

**25.** Procédé selon l'une quelconque des revendications 22 à 24, **caractérisé en ce que** la période de validité du code PIN du jeton matériel est limitée par le fait qu'un compteur, notamment un compteur destiné au comptage des saisies précédentes d'un code PIN correct, atteint ou dépasse une valeur numérique limite.

**26.** Procédé selon l'une quelconque des revendications 22 à 25, **caractérisé en ce que** l'application propose une pluralité de nouveaux codes PIN pour lesquels elle a trouvé des valeurs d'entrée lors des calculs précédents, dans lequel l'un de ces codes PIN proposés peut être sélectionné en tant que nouveau code PIN.

x: Änderungswert als Differenzwert

h: Hashfunktion

$$PIN = h\,(data) + x$$

Figur 1

EP 2 281 259 B1

**y: Änderungswert als Eingangswert**

**h: Hashfunktion**

**PIN = h (data & y)**

**Figur 2**

EP 2 281 259 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1685471 B1
- US 2007282756 A1

**In der Beschreibung aufgeführte Nicht-Patentliteratur**

- The Unbearable Lightness of PIN Cracking. **OMER BERKMAN et al.** Financial Cryptography and Data Security. Springer Verlag, 12. Februar 2007, vol. 4886, 224-238